(19) **Europäisches Patentamt**

**European Patent Office**

**Office européen des brevets**

(11) **EP 1 387 476 A1**

(12) **EUROPEAN PATENT APPLICATION**

(43) Date of publication:
**04.02.2004 Bulletin 2004/06**

(51) Int Cl.[7]: **H02M 1/12**

(21) Application number: **02425509.3**

(22) Date of filing: **01.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **STMicroelectronics S.r.l.**
**20041 Agrate Brianza (Milano) (IT)**

(72) Inventors:
  • **Pidutti, Albino**
    **33100 Udine (IT)**

  • **Adragna, Claudio**
    **20052 Monza (Milano) (IT)**
  • **Fagnani, Mauro**
    **20014 Nerviano (Milano) (IT)**

(74) Representative: **Mittler, Enrico**
    **c/o Mittler & C. s.r.l.,**
    **Viale Lombardia, 20**
    **20131 Milano (IT)**

(54) **Transition mode power factor correction device in switching power suppliers**

(57)     A device is described for the correction of the power factor in power supply units with forced switching operating in transition mode. Said device comprises a converter (20) and a control device (100, 500) coupled with said converter (20) so as to obtain a regulated voltage (Vout) on the output terminal from an alternating network input voltage (Vin). The converter (20) comprises a power transistor (M) whilst the control device (100, 500) comprises a pilot circuit (3, 5, 6) suitable for determining the switch-on time (Ton) and the switch-off time (Toff) of the power transistor (M). The control device (100, 500) furthermore comprises control means (200, 400, 600) coupled with said pilot circuit (3, 5, 6) and with said converter (20) and capable of prolonging the switch-on time (Ton) of the power transistor (M) at the instants of time wherein the alternating network voltage (Vin) substantially takes on the value zero.

Fig.4

EP 1 387 476 A1

**Description**

The present invention refers to a device for the correction of the power factor in power supply units with forced switching operating in transition mode.

These devices are generally used for the active correction of the power factor (PFC) for power supply units with forced switching used in common electronic appliances such as computers, televisions, monitors, etc and to supply fluorescent lamps, in other words pre-regulation stages with forced switching which have the task of absorbing from the network supply a current that is virtually sinusoidal and is in phase with network voltage. Therefore this power supply unit with forced switching therefore comprises a PFC and a DC-DC converter connected to the PFC output.

The traditional power supply unit with forced switching comprises a DC-DC converter and an input stage connected to the electric energy distribution network consisting of a full-wave diode rectifier bridge and of a capacitor connected immediately downstream so as to produce non-regulated direct voltage from the network sinusoidal alternating voltage. The capacitor has sufficiently large capacity for the undulation at its ends to be relatively small compared with a direct level. The bridge rectifier diodes therefore conduct only a small portion of each half cycle of the network voltage because the momentary value of the network voltage is lower than the voltage on the capacitor for most of the cycle. The network current absorbed will accordingly be a series of narrow pulses the amplitude of which is 5 to 10 times the resulting average value.

This has considerable consequences: the current absorbed from the line has peak and effective values that are much greater than in the case of absorption of sinusoidal current, network voltage is distorted by the almost simultaneous pulsed absorption of all the appliances connected to the network, in the case of three-phase systems the current in the neutral conductor is greatly increased and the energy potential of the system for producing electric energy is poorly used. In fact, the wave shape of a pulsed current is very rich in odd harmonic distortions that, whilst not contributing to the power returned to the load, contribute to increasing the effective current absorbed by the network and therefore to increasing the dissipation of energy.

In quantitative terms this can be expressed in terms of power factor (PF), defined as the ratio between real power (the power that the power supply unit returns to the load plus the power dissipated inside it in the form of heat) and apparent power (the product of the effective network voltage for the effective absorbed current), both in terms of total harmonic distortion (THD), generally defined as the percentage ratio between energy associated with all the harmonic distortions of a superior order and that associated with the fundamental harmonic distortion. Typically, a power supply unit with a capacitive filter has a PF between 0.4-0.6 and a THD greater than 100%.

A PFC arranged between the rectifier bridge and the input of the DC-DC converter enables a virtually sinusoidal current to be absorbed from the network, which current is in phase with the voltage and brings PF close to 1 and reduces THD.

The PFCs generally comprise a converter provided with a power transistor and an inductor coupled with it and a control device coupled with the converter in such a way as to obtain from a network alternating input voltage a direct voltage regulated at the output. The control device is capable of determining the period of switch-on time Ton and the period of switch-off time Toff of the power transistor; uniting the period of Ton and the period of Toff time gives the cycle period or switching period of the power transistor.

The commercially available PFC circuit types are basically of two kinds that differ according to the different control technique used: pulse width modulation (PWM) control with fixed frequency wherein current is conducted continuously into an inductor of the power supply unit and variable frequency PWM control, also known as 'transition mode' (TM) because the current in the inductor is reset exactly at the end of each switching period. TM control can be operated both by controlling inductor current directly or by controlling the period of Ton time. The fixed-frequency control technique provides better performance but uses complex circuit structure whereas TM technique requires a more simple circuit structure. The first technique is generally used with high power levels whilst the second technique is used with medium to low power levels, normally below 200W.

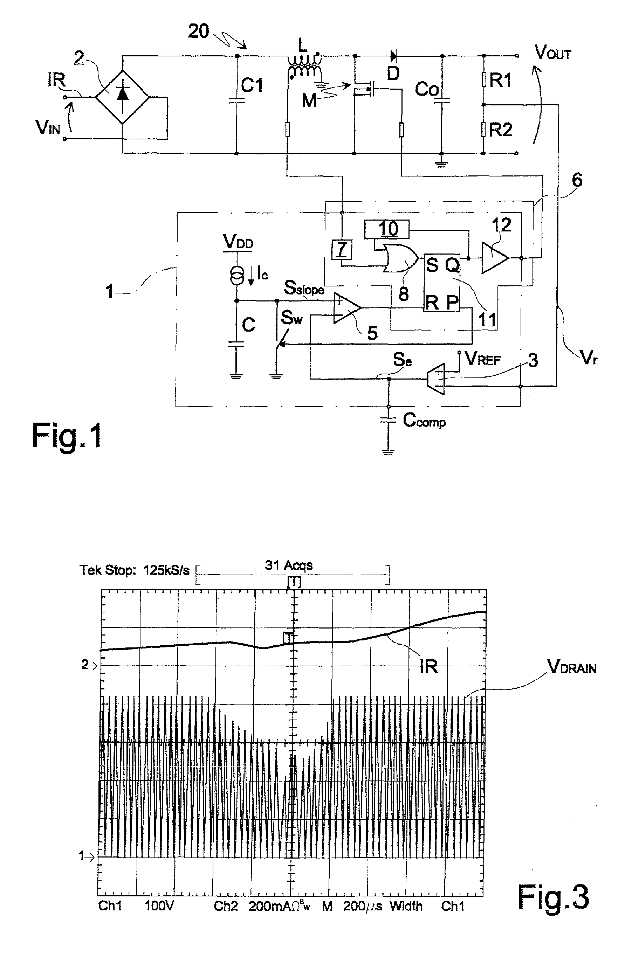

Figure 1 is a diagrammatic view of a PFC pre-regulatory stage of the TM type comprising a boost converter 20 and a control device 1. The boost converter 20 comprises a full-wave diode rectifier bridge 2 with Network voltage input Vin, a capacitor C1 (that is used as a high-frequency filter) with a terminal connected to the diode bridge 2 and the other terminal grounded, an inductor L connected to a terminal of the capacitor C1, an MOS power transistor M with the drain terminal connected to an inductance terminal L downstream of the latter, the source terminal being connected to a grounded resistance Rs, a diode D having the anode connected to the common terminal of the inductor L and the transistor M and the cathode connected to a capacitor Co, the other terminal being grounded. The boost converter 20 generates direct output voltage Vout on the capacitor Co that is greater than the network maximum peak voltage, typically 400 V for systems powered by European network supplies or by universal supply. Said Output voltage Vout will be the input voltage of the DC-DC converter connected to the PFC.

If it is assumed that the current absorbed by the network from the PFC in virtually stationary running conditions (in order words with constant effective input voltage and constant output load) is sinusoidal in each switch-on cycle of the transistor M, the peak current of the inductor L is Ip=Vin*Ton/L, Ton being the period of time during which the transistor M is switched on. As the input voltage is sinusoidal, if Ton is kept constant during each network cycle, the peak current of the inductor L will be enveloped by a sinusoidal current. An appropriate filter between the network and the input of the rectifier bridge (always present for questions of electromagnetic compatibility) will filter the input current, eliminating the high-frequency components, so that the current absorbed from the network will be a sinusoidal current of the same frequency and in phase with the network current.

Normally, in PFCs of the TM type controlled in peak-current mode the constancy of switch-on time Ton is a result of forcing the peak current of the inductor to follow a sinusoidal reference. This reference is taken from the rectified voltage after the bridge the amplitude of which is corrected with the error signal coming from the regulating loop of the output voltage, by means of a multiplier block. The constant Ton approach has the advantage that it does not require reading of the input voltage or of a multiplier block.

The control device 1 has to maintain Output voltage Vout at a constant value by feedback control. The control device 1 comprises an error amplifier 3 suitable for comparing part of the output voltage Vout, in other words the voltage Vr deriving from Vr=R2*Vout/(R2+R1) (where resistances R1 and R2 are serially connected together and parallel to the capacitor Co) with a reference voltage Vref, for example 2.5V, and generates an error signal Se proportionate to their difference. The undulation frequency of output voltage Vout is double that of the network voltage and is superimposed on the direct value. However, if the band amplitude of the error amplifier is significantly reduced (typically to below 20 Hz) by means of a compensation capacitor Ccomp and we assume virtually stationary operation, in other words with constant effective input voltage and constant output load, said undulation will be greatly attenuated and the error signal will become constant.

The error signal Se is sent to the inverting input of a comparator PWM 5 whereas at the non-inverting input a ramp signal Sslope persists, which signal is generated by a current generator Ic connected to a VDD supply, a capacitor C and a switch SW. If the signals Se and Sslope are the same the comparator 5 sends a signal to a control block 6 suitable for piloting the transistor M, which in this case switches it off. As the error amplifier output is constant the duration of the conduction period of the transistor MOS M will be constant within each network cycle. As the network load and/or voltage condition varies the error signal will change and will set the Ton value required to regulate the output voltage. As soon as the transistor MOS is switched off SW is closed and C is unloaded.

After the transistor MOS is switched off the inductor L discharges the energy stored on the load until it is completely emptied. At this point the diode D does not permit the conduction of current and the drain terminal of the transistor M remains floating, so that its voltage Vdrain moves towards the instantaneous input voltage by means of resonance oscillations between the stray capacity of the terminal and the inductance of the inductor L. The drain voltage Vdrain therefore falls rapidly, being coupled by an auxiliary coil of the inductor L with the terminal to which a block is connected that detects current zeroes 7 that is part of the block 6. This block 7 identifies this negative front, sends a pulsed signal to an OR gate 8, the other input of which is connected to a starter 10 that is suitable for sending a signal to the OR gate 8 at the instant of start time; the output signal S of the gate 8 OR is the set input S of a set-reset flip-flop 11 with another input R that is the output signal to the device 5, it having two output signals, Q and P (the negated Q signal). The signal Q is sent to the input of a driver 12, which in this case commands the renewed switch-on of the transistor M (in other cases it can command it to be switched off), and the signal P in this case commands the opening of the switch SW (in other cases it commands it to be closed) in such a way that the capacitor C can recharge, thereby starting a new switching cycle. In this way the PFC works in transition mode.

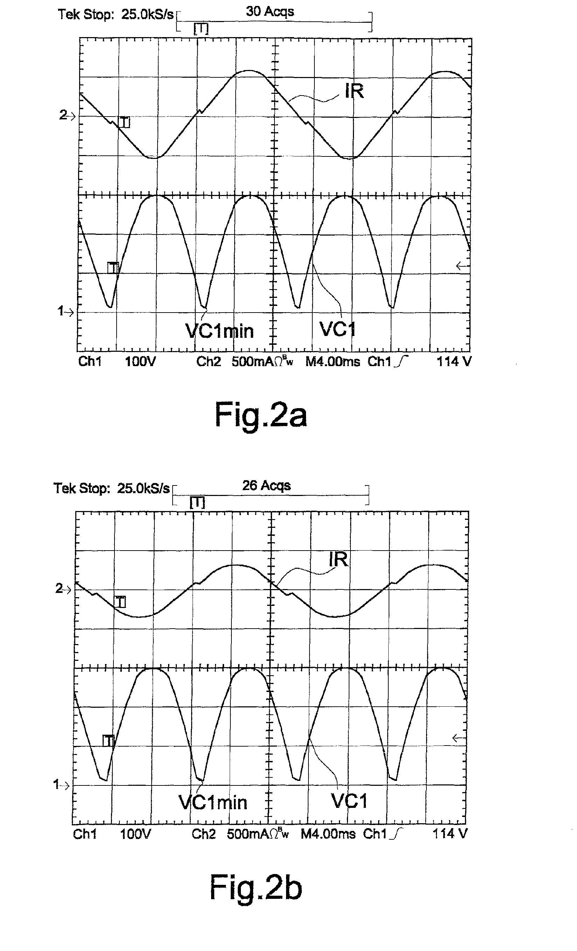

A PFC absorbs an almost sinusoidal current that is not completely sinusoidal. There are two main sources of the residual distortion, which tends to maintain a not insignificant THD. The first is undulation the frequency of which is twice that of the network superimposed on the Se signal at the direct level present at the error amplifier output, which introduces a slight modulation of the Ton period of time by producing a $3^{rd}$ harmonic distortion in the current reference generated by the multiplier. The second is cross distortion, which is seen as a short flat zone in the wave form of the network current IR, at the network voltage zeroes, which correspond to the minimum values VClmin of the voltage VC1 at the ends of the capacitor C1, as shown in Figure 2, which shows the current IR and the voltage VC1 at the ends of the capacitor C1 in two cases with Vin=220Vac and input power Pin = 80W (Figure 2a) and Vin=220Vac and Pin=40W (Figure 2b). The cross distortion increases as the PFC load decreases and as effective network voltage increases.

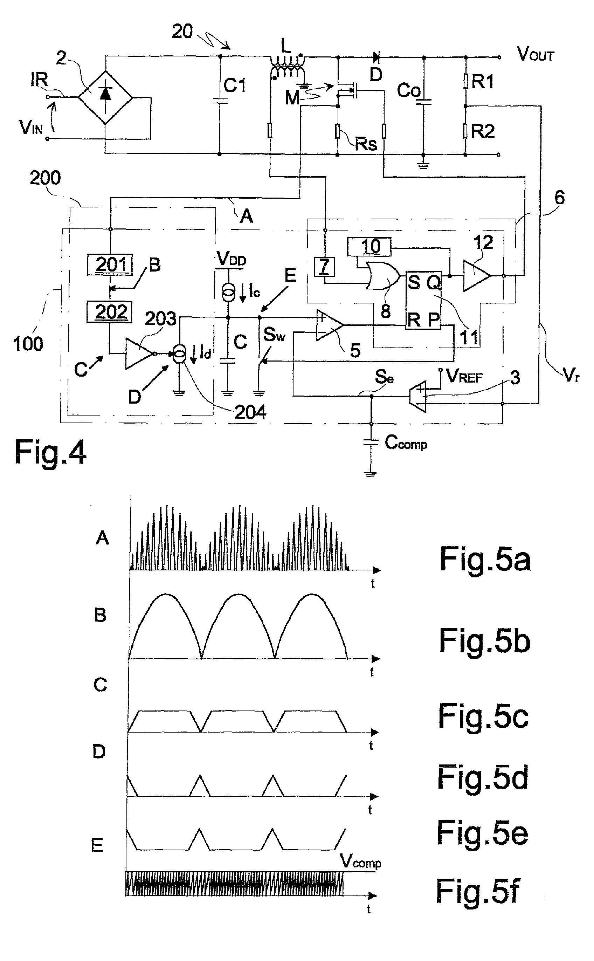

The cause of this distortion is the defective transfer of input-output energy that occurs near the zeroes of the network voltage. In this zone the energy stored in the inductor L is very low, insufficient to load the stray capacity of the drain node of the transistor M to output voltage Vout (typically 400V) so as to enable the passage of current through the diode D and transfer the energy of the inductor L to output. As a result, the diode is not switched on for a certain number of switching cycles and the energy network remains confined in the resonating circuit consisting of said stray capacity and of the inductor L. This phenomenon, which is accentuated by the presence of the capacitor C1 that filters high frequency, is shown in detail in Figure 3, wherein the current IR and the voltage Vdrain are shown in a zone wherein the current IR has a substantially flat wave form.

In view of the state of the technique described, the object of the present invention is to provide a device for the correction of the power factor in power supply units with forced switching operating in transition mode that enables cross distortion to be minimised.

According to the present invention said object is achieved by means of a device for the correction of the power factor in power supply units with forced switching operating in transition mode, comprising a converter and a control device coupled with said converter so as to obtain from a network alternating input voltage a voltage regulated on the output terminal, said converter comprising a power transistor, said control device comprising a pilot circuit suitable for determining the period of switch-on and switch-off time of said power transistor, characterised in that said control device comprises a control means coupled with said pilot circuit and with said converter and which is capable of prolonging said period of time during which the transistor is switched at the instants of time wherein said network alternating voltage substantially takes on the value zero.

The characteristics and advantages of the present invention will appear evident from the following detailed description of its embodiments thereof, illustrated as non-limiting examples in the enclosed drawings, in which:

Figure 1 is a circuit diagram of a PFC in transition mode for a prior-art power supply unit with forced switching;

Figures 2a, 2b show diagrams obtained in an oscilloscope that show the network current and the rectified network voltage taken at the ends of the capacity placed immediately after the rectifier bridge of the PFC of Figure 1 with differing input power;

Figure 3 shows, around a zero of network voltage, the network current and the voltage on the drain terminal of the MOS transistor of the PFC in Figure 1;

Figure 4 is a circuit diagram of a PFC in transition mode for a power supply unit with forced switching according to a first embodiment of the present invention;

Figures 5a-5f show the most significant signals of the circuit in Figure 4;

Figures 6a, 6b show diagrams obtained in an oscilloscope that show the network current and the rectified network voltage taken at the ends of the capacity located immediately after the rectifier bridge of the PFC in Figure 4 with differing input powers;

Figure 7 shows, around a zero of the network voltage, the network current and the voltage on the drain terminal of the transistor MOS of the PFC in Figure 4;

Figure 8 is a circuit diagram of a PFC in transition mode for a power supply unit with forced switching according to a second embodiment of the present invention;

Figure 9 shows the output signal of the block 402 of the circuit in Figure 8 for three different circuit input signals;

Figure 10 is a circuit diagram of a PFC in transition mode for a power supply unit with forced switching according to a third embodiment of the present invention;

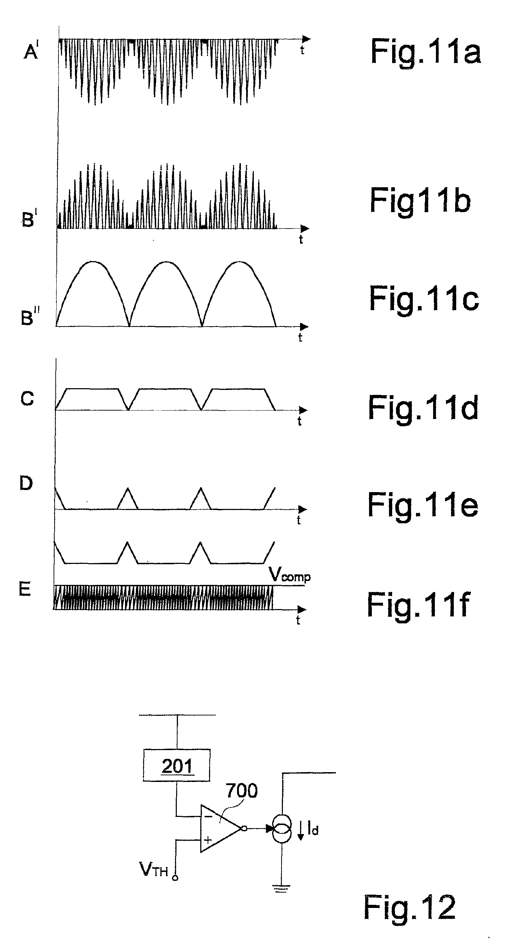

Figures 11 a- 11 f show the most significant signals of the circuit in Figure 10;

Figure 12 is a part of a circuit diagram of a PFC in transition mode for a power supply unit with forced switching according to a variation on the preceding embodiments of the present invention.

Figure 4 is a PFC device for a power supply unit with forced switching operating in transition mode according to the first embodiment of the present invention; the elements that are the same as the circuit in Figure 1 will be indicated by the same references. The PFC comprises a boost converter 20 comprising a full-wave diode rectifier bridge 2 that has a network input voltage Vin with a network period Tr, a capacitor C1 that has one terminal connected to the diode bridge 2 and the other terminal grounded, an inductor L connected to a terminal of the capacitor C1, a MOS power transistor M with its drain terminal connected to an inductor terminal L downstream of the latter, the source terminal being connected to a grounded resistance Rs, a diode D with its anode connected to the terminal shared by the inductor L and the transistor M and the cathode connected to a capacitor Co the other terminal of which is grounded. The boost power supply unit generates a direct output voltage Vout that is greater than the network maximum peak voltage, typically 400 V for systems powered by European network or by universal power supplies.

The PFC comprises a control device 100 that has to maintain output voltage Vout at a constant value by means of feedback control. The control device 100 comprises an error amplifier 3 suitable for comparing part of the output voltage Vout, in other words the voltage Vr obtained by Vr=R2*Vout/(R2+R1) (where resistances R1 and R2 are serially connected together and are connected parallel to the capacitor Co) with a reference voltage Vref, for example 2.5V, and generates an error signal Se proportionate to their difference. Output voltage Vout has an undulation, the frequency of which is twice that of the network supply and is superimposed on the direct value. If, however, the amplitude of the error amplifier band is significantly reduced (typically below 20 Hz) by means of a compensation capacitor Ccomp and we assume that operation is almost stationary, in other words with constant effective input voltage and constant output load said undulation will be greatly attenuated and the error signal will become constant.

The error signal Se is sent to the inverting input of a PWM comparator 5 whereas on the non-inverting input a ramp signal Sslope persists that is generated by a current generator Ic connected to a voltage supply VDD, a capacitor C and a switch SW. If the signals Se and Sslope are the same the comparator 5 sends a signal to a control block 6 suitable for piloting the transistor M, which in this case switches it off. As the output of the error amplifier 3 is constant, the duration of the conduction period Ton of the transistor M will be constant during each network cycle. As the load and/or network voltage conditions vary the error signal Se will change and will set the value Ton required to regulate the output voltage. As soon as the MOS transistor is switched off the switch SW is closed and the capacitor C is unloaded.

A circuit 200 according to the invention enables the switch-on time Ton of the MOS transistor M to be prolonged near the zeroes of the network voltage Vin, in other words when the network voltage takes on the value of a few Volts (for example 2V), a value that can be considered to be zero compared with the peak value of the network voltage. Said zeroes of the network voltage Vin correspond to the minimum values VClmin of the voltage VC1 at the ends of the capacitor C1. In this way, a greater peak current is obtained in the inductor L.

The resistance Rs generates the voltage signal A (Figure 5a), which shows an image of the current signal that passes through the transistor M. This signal A is supplied to the circuit 200, more precisely to a peak-detector device 201 that extracts from the signal A the sinusoidal envelope B (Figure 5b), i.e. a rectified sinusoidal component with a period that is the same as half the period Tr of the voltage network Vin. Said signal B is supplied to the input of a limiter circuit 202 that cuts the central part of the semi-period of the network of the sinusoidal signal B by supplying a signal C (Figure 5c). The latter is inverted by an inverter 203 and is translated upwards; the resulting signal D (Figure 5d) commands a device 204 that is suitable for generating a current Id that is proportionate to the signal D. The current Id is therefore zero for almost the entire network semi-period except near the zeroes of the network voltage where it is subtracted from the current Ic suitable for loading the capacitor C. At such moments of time the load of the capacitor C (signal E in Figure 5f) is slowed whereas the switch-on time Ton (Figure 5e) is prolonged in relation to the value commanded by the output voltage of comparator 5.

The size of the correction of the switch-on time Ton can be regulated by opportunely selecting the resistance Rs.

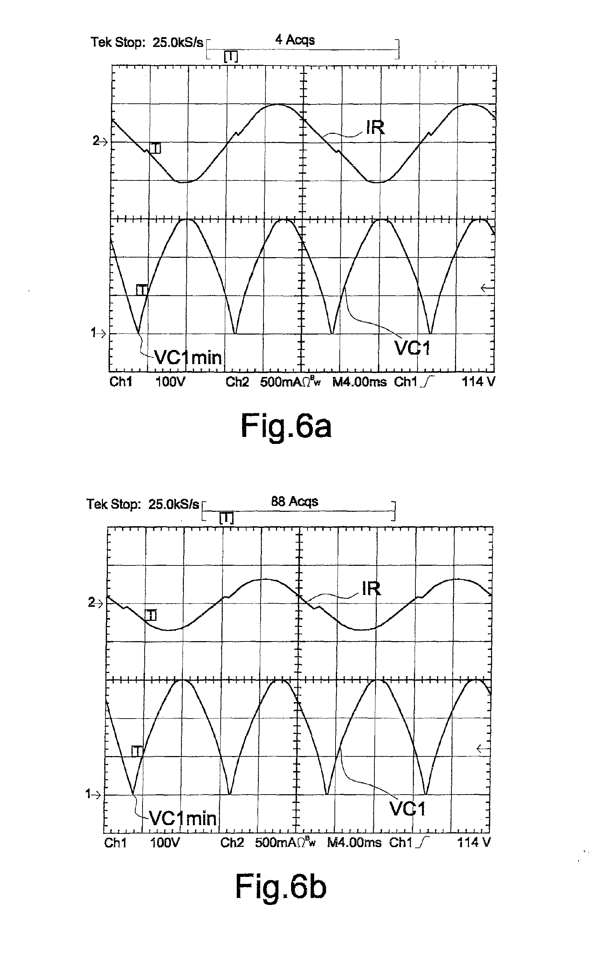

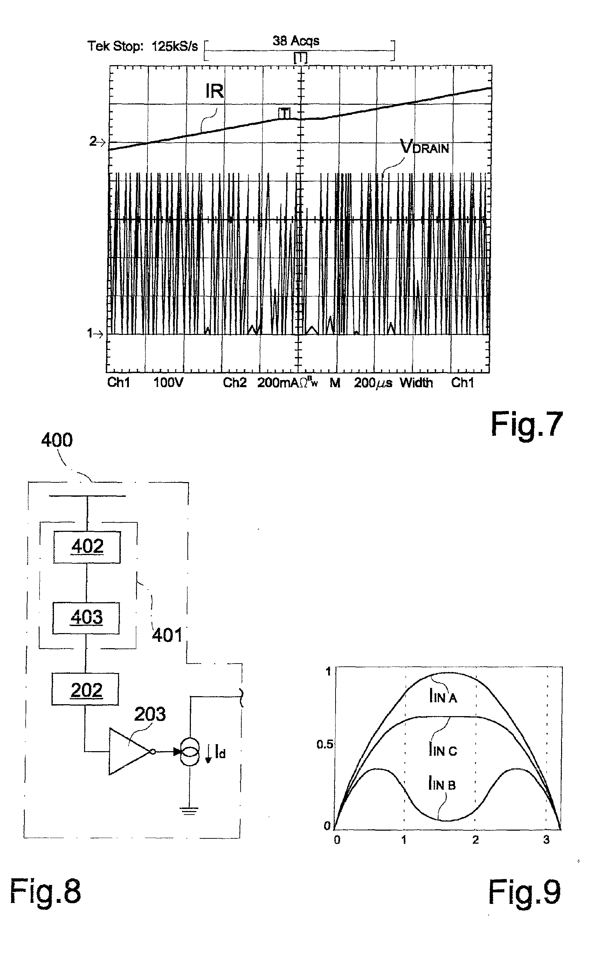

The correction effects made by the circuit 200 can be seen in Figures 6a, 6b and 7. Figures 6a, 6b show diagrams obtained in an oscilloscope that show the current of network IR and the voltage VC1 at the ends of the capacity C1 with respectively a voltage Vin=220VAC and power Pin=80W, and with voltage Vin=220VAC and power Pin=40W. Figure 7 shows, at about zero of the network voltage, the network current IR and the voltage Vdrain on the drain terminal of the MOS transistor M.

Figure 8 shows a circuit of a control device of a PFC for a power supply unit with forced switching operating in transition mode according to the second embodiment of this invention. The control device of said second embodiment is very similar to the control device 100 of the first embodiment except for the presence of the circuit 400 suitable for replacing the circuit 200 of Figure 4 and capable of prolonging the switch-on time Ton of the MOS transistor M at the zeroes of the network voltage Vin, which correspond to the minimum VC1 min values of the voltage VC1 at the ends of the capacitor C1, so as to obtain greater peak current in the inductor L. The circuit 400 is different from the circuit 200 due to the presence of a device 401 in place of the peak detector device 201. The device 401 comprises a low-pass RC filter 402 and an amplifier stage 403. The filter band is much greater than the frequency of the rectified network (e.g. 120 Hz) but much less than that of the switching frequency of the transistor M (e.g. 30 kHz). The signal detected by the RC filter 402 is therefore the average current Im cycle by cycle that passes through the MOSFET, which, as it is a series of height triangles enveloped by a sinusoidal and duration component Ton, can be expressed by:

$$Im = \frac{1}{2} \, Ip \, \sin \alpha D(\alpha) = \frac{1}{2} \, Ip \, \sin \alpha \, Tonf\,(\alpha)$$

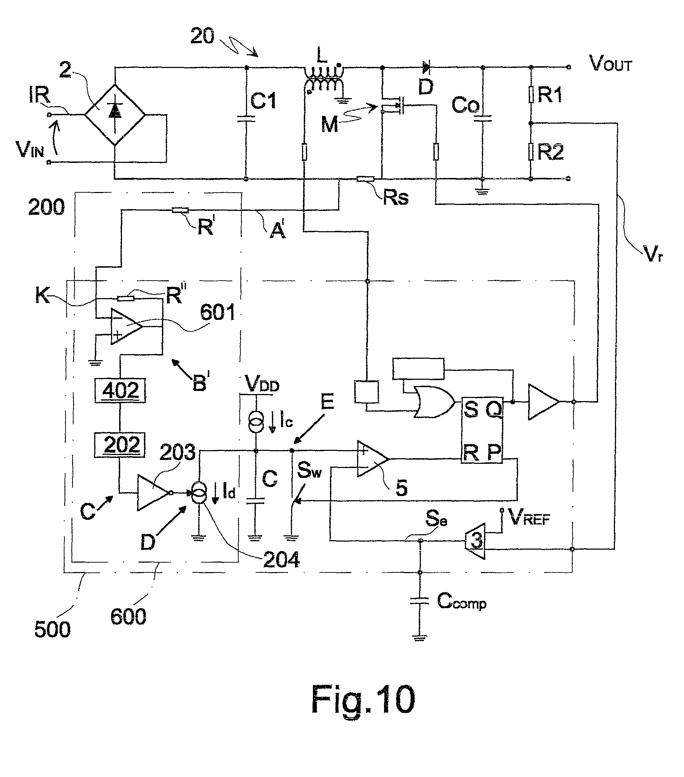

where $D(\alpha)$ is the duty cycle of the transistor M, in other words the ratio between its conduction time Ton and the switching period T, a function of the instantaneous network voltage and therefore of $\alpha$, $f(\alpha) = 1/T(\alpha)$, the corresponding switching frequency and Ip are the value of the peak current in the transistor M at the peak of the sinusoidal current of the network voltage Vin. This signal Im for low values of the effective input voltage Vinf resembles a sinusoidal current (signal Iina in Figure 9); as said input voltage Vinf increases the peak Ip decreases (the input power is virtually constant because the PFC load is supposed to be constant) and the form flattens to the critical value of the voltage value $Vinc = \sqrt{2}/4$ . Vout (Vout is the output voltage regulated by the PFC) wherein there is maximum flatness (signal Iinc in Figure 9). For greater Vinf values the signal Im inflects and has a depression at the centre (signal Iinb in Figure 9). The amplitude of the signal Im must therefore be amplified so that the minimum of the wave form at maximum voltage Vinf is never less than the limit value of the clipping circuit in order to obtain again the same signal C that is obtained with the circuit in Figure 4, which is used in the same way as the circuit in Figure 4. Figure 10 shows a PFC in transition mode for a power supply unit with forced switching according to a third embodiment of this invention; the elements that are the same as the circuit of Figure 4 will be indicated by the same references. The PFC device comprises the control device 500, which is very similar to the control device 100 of Figure 4 except for the presence of a circuit 600 (partially similar to the circuit 400 of Figure 8) that is capable of prolonging the switch-on time Ton of the MOS transistor M at the zeroes of the network voltage Vin, which correspond to the minimum values VC1min of the voltage VC1 at the ends of the capacitor C1, so as to obtain greater peak current in the inductor L. The circuit 500 differs from the circuit 100 also through the fact that the resistance Rs is not placed serially in relation to the transistor M but on the current return so that the same current passes through it as passes through the inductor L, consisting of a series of contiguous triangles (no longer spaced apart as in the previous case) the peak of which is enveloped by a sinusoidal component. In this case the voltage signal A' on the resistance Rs, proportionate to the current of the inductor L, will be negative. It is at the input to circuit 600 and is coupled with an input terminal K that inverts an operational amplifier 601 by means of a resistance R'; the non-inverting input of the amplifier 601 is grounded. The amplifier 601 will supply the output voltage signal B' inverted in relation to the signal A' picked up and amplified by the ratio R"/R'. Said voltage signal B' is supplied to the low-pass RC filter 402. In this case the signal detected by the RC filter is proportionate to the average current cycle by cycle that passes through the inductor L, which does not suffer from the variability of its form in relation to the network voltage as previously seen for the signal Im in the second embodiment of the invention. The signal B" thereby obtained, in other words a rectified sinusoidal component with a period the same as half the period Tr of the network voltage Vin, is sent to the limiter circuit by obtaining the signal C, which is then inverted, obtaining the signal D to pilot the commanded generator Id, in the manner described previously.

Alternatively, the limiter circuit 402 can be replaced by a comparator 700 capable of comparing the output signal from the peak detector or from the low-pass RC filter below a certain threshold Vth and in this case activating the device Id. A variation will occur when the switch-on time Ton is triggered inside each network voltage zero in place of a progressive increase and a subsequent progressive decrease to return to the value set by the control loop.

Both the trimming voltage of the limiter device 202 and the threshold voltage Vth of the comparator device 700 may be set values or values connected with the signal Se that provides information on the size of the PFC load. As with a decreased load (to which a decrease of Se corresponds) the cross distortion that one wishes to correct deteriorates, the trimming level, or possibly the voltage Vth should increase or decrease according to the decrease of the signal Se or vice versa, so as to maximise the correction effect with lesser loads.

Table 1 shows experimental data that show the effectiveness of the correction made by the circuits of Figures 4 and 10. The table shows the cross distortion values THD1 for the circuit in Figure 1, the cross distortion THD2 for the circuit in Figure 4, the cross distortion THD3 for the circuit in Figure 10, when there is a variation in the input voltage Vin with full load (Full) and a half load (Half).

The circuits 200, 400, 600 can be integrated into the same chip with the other components of the respective control devices 100 and 500.

Table 1.

| Load | Vin [Vac] | THD1 | THD2 | THD3 |
|---|---|---|---|---|
| Full Full | 85 | 6.7% | 6.0% | 5.1% |
| | 110 | 7.7% | 6.7% | 5.4% |
| | 135 | 8.4 % | 7.0 % | 5.3 % |
| | 175 | 9.4% | 7.2% | 4.9% |
| | 220 | 10.8 % | 7.3 % | 5.0 % |
| | 265 | 12.3 % | 7.7 % | 5.7 % |
| Half Half | 85 | 10.5 % | 9.3 % | 7.1% |
| | 110 | 12.1 % | 10.3 % | 7.4% |
| | 135 | 12.5 % | 10.3 % | 6.7 % |
| | 175 | 12.5% | 9.4% | 5.2% |
| | 220 | 12.6% | 8.6% | 6.0% |
| | 265 | 12.8% | 8.1% | 7.1% |

## Claims

1. Device for the correction of the power factor in power supply units with forced switching operating in transition mode, comprising a converter (20) and a control device (100, 500) coupled with said converter (20) so as to obtain from an alternating network input voltage (Vin) a regulated voltage (Vout) on the output terminal, said converter (20) comprising a power transistor (M), said control device (100, 500) comprising a pilot circuit (3, 5, 6, Ic, SW, C) suitable for determining the switch-on time (Ton) and the switch-off time (Toff) of said power transistor (M), **characterised in that** said control device (100, 500) comprises control means (200, 400, 600) coupled with said pilot circuit (3, 5, 6, Ic, SW, C) and with said converter (20) and which are capable of prolonging said switch-on time period (Ton) of the power transistor (M) at the instants of time wherein said alternating network voltage (Vin) substantially takes on the value zero.

2. Device according to claim 1, **characterised in that** said pilot circuit (3, 5, 6, Ic, SW, C) comprises an error amplifier (3) having a first signal (Vr) at the inverting terminal input that is proportionate to said regulated voltage (Vout) and a reference voltage (Vref) on the non-inverting terminal, means (Ic, SW, C) for generating a ramp voltage signal comprising a capacitor (C), a first generator of a current signal (Ic) suitable for loading said capacitor (C) and a switch (SW) arranged parallel to the capacitor (C) and commanded by said pilot circuit (3, 5, 6, Ic, SW, C) to unload said capacitor (C), a comparator (5) capable of comparing said ramp signal (E) with an error signal (Se) from the output of said error amplifier (3) and capable of providing an output signal (R) suitable for determining said switch-on time period (Ton) of said power transistor (M), said control means (200; 400; 600) being coupled with said means (Ic, SW, C) for generating a ramp voltage signal so as to decrease the value of the load current of the capacitor at said instants of time wherein the alternating network voltage (Vin) takes on a value that is substantially zero.

3. Device according to claim 2, **characterised in that** said control means (200, 400, 600) comprise a detector means (201, 401, 601-402) suitable for extracting from a signal (A, A') that is proportionate to the current that flows through said converter (20) a rectified sinusoidal component (B, B") with a period that is the same as half the period of the period (Tr) of the network voltage (Vin), a second current generator (Id) coupled with said first generator (Ic) and further control means (202-203, 201-700) which have at the input said rectified sinusoidal component (B, B") and are capable of commanding said second current generator (Id) so as to decrease the value of the load current of the capacitor (C) at said instants of time wherein the alternating network voltage (Vin) takes on the value zero.

4. Device according to claim 3, **characterised in that** said detector device (201, 401) extracts said rectified sinusoidal component (B) from a signal (A) that is proportionate to the current that flows through said power transistor (M).

5. Device according to claim 4, **characterised in that** said detector device (201) is a peak detector of the current signal that flows through said power transistor (M).

6. Device according to claim 3, **characterised in that** said converter (20) comprises a rectifying circuit (2) of the network voltage (Vin), a capacitor (C1) arranged parallel to said rectifying circuit (2) and an inductor (L) arranged between said capacitor (C1) and said power transistor (M), and **in that** said detector device (601-402) extracts said rectified sinusoidal component (B") from a signal (A') that is proportionate to the current that flows through said inductor (L).

7. Device according to claim 4 or 6, **characterised in that** said detector device (401) comprises a low-pass filter (402) and an amplifier (403, 601).

8. Device according to claim 3, **characterised in that** said further control means (202-203) comprise a limiter device (202) suitable for selecting the central part of said rectified sinusoidal component (B) at each half of said period (Tr) of the network voltage (Vin) and an inverter (203) suitable for inverting the output signal (C) from the limiter device (202) and commanding said second current generator (Id).

9. Device according to claim 3, **characterised in that** said further control means (700) comprise a comparator capable of comparing said rectified sinusoidal component (B, B") with a reference voltage (Vth) and the output signal of which commands said second current generator (Id).

10. Device according to claim 1, **characterised in that** said control means (200, 400, 600) can be integrated in a chip with the pilot circuit (3, 5, 6, Ic, SW, C) of said control device (100, 500).

Fig.1

Fig.3

Tek Stop: 25.0kS/s   30 Acqs

IR

VC1min    VC1

Ch1   100V        Ch2   500mAΩ<sup>B</sup>w   M4.00ms  Ch1 ∫   114 V

# Fig.2a

Tek Stop: 25.0kS/s   26 Acqs

IR

VC1min    VC1

Ch1   100V        Ch2   500mAΩ<sup>B</sup>w   M4.00ms  Ch1 ∫   114 V

# Fig.2b

Fig.4

Fig.5a

Fig.5b

Fig.5c

Fig.5d

Fig.5e

Fig.5f

Fig.6a

Fig.6b

Tek Stop: 125kS/s    38 Acqs

IR

V_DRAIN

2→

1→

Ch1   100V    Ch2   200mAΩ^B w   M   200μs   Width   Ch1

## Fig.7

400

402

403

401

202

203

$I_d$

## Fig.8

1

$I_{IN\,A}$

$I_{IN\,C}$

0.5

$I_{IN\,B}$

0

0    1    2    3

## Fig.9

Fig.10

A'

Fig.11a

B'

Fig11b

B''

Fig.11c

C

Fig.11d

D

Fig.11e

E

$V_{comp}$

Fig.11f

201

700

$I_d$

$V_{TH}$

Fig.12

**European Patent Office**

## EUROPEAN SEARCH REPORT

Application Number

EP 02 42 5509

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 582 813 A (IBM) 16 February 1994 (1994-02-16) * the whole document * | 1,2 | H02M1/12 |
| A | US 2001/038545 A1 (MARIEN PETRUS CORNELIUS MARIA ET AL) 8 November 2001 (2001-11-08) * the whole document * | 1-10 | |

TECHNICAL FIELDS SEARCHED (Int.Cl.7)

H02M

The present search report has been drawn up for all claims

| Place of search | Date of completion of the search | Examiner |
|---|---|---|
| THE HAGUE | 14 March 2003 | Gentili, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**EP 1 387 476 A1**

ANNEX TO THE EUROPEAN SEARCH REPORT
ON EUROPEAN PATENT APPLICATION NO.

EP 02 42 5509

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2003

| Patent document cited in search report | | Publication date | Patent family member(s) | | Publication date |
|---|---|---|---|---|---|
| EP 0582813 | A | 16-02-1994 | US | 5367247 A | 22-11-1994 |
| | | | EP | 0582813 A2 | 16-02-1994 |
| | | | JP | 2610096 B2 | 14-05-1997 |
| | | | JP | 6165508 A | 10-06-1994 |
| US 2001038545 | A1 | 08-11-2001 | CN | 1366730 T | 28-08-2002 |
| | | | WO | 0182458 A1 | 01-11-2001 |
| | | | EP | 1279220 A1 | 29-01-2003 |

EPO FORM P0459